Europäisches Patentamt

European Patent Office

Office européen des brevets

(11) Publication number : **0 480 677 A2**

# (12) EUROPEAN PATENT APPLICATION

(21) Application number : 91309213.6

(51) Int. Cl.$^5$ : **B29D 7/01**

(22) Date of filing : 08.10.91

(30) Priority : **11.10.90 JP 270608/90**
**11.10.90 JP 270609/90**

(43) Date of publication of application :
**15.04.92 Bulletin 92/16**

(84) Designated Contracting States :
**DE FR GB**

(71) Applicant : **MITSUBISHI GAS CHEMICAL COMPANY, INC.**
**No. 5-2, Marunouchi 2-chome**
**Chiyoda-ku, Tokyo (JP)**

(72) Inventor : **Gaku, Morio, c/o Mitsubishi Gas Chem. Co. Inc.**
**5-2, Marunouchi 2-chome, Chiyoda-ku Tokyo (JP)**
Inventor : **Sayama, Norio, c/o Mitsubishi Gas Chem. Co. Inc.**
**5-2, Marunouchi 2-chome, Chiyoda-ku Tokyo (JP)**
Inventor : **Kimbara, Hidenori, c/o Tokyo Works of Mitsubishi**
**Gas Chem. Co. Inc., 1-1, Niijuku 6-chome Katsushika-ku, Tokyo (JP)**

(74) Representative : **Myerscough, Philip Boyd et al**
**J.A. Kemp & Co. 14 South Square, Gray's Inn London WC1R 5LX (GB)**

(54) Thermoplastic resin-based molded article and process for producing the same.

(57)   A thermoplastic resin-based functional film obtained by a process which comprises the following steps either A or B and C :

A. mixing 10 to 95 parts by weight of a thermoplastic resin (a) having a melting point or melting starting temperature $Tm^a$, 5 to 150 parts by weight, per 100 parts by weight of said thermoplastic resin (a), of a solvent (c) and 5 to 90 parts by weight of a functional substance having a property-change temperature $Tb$ equal to or lower than $Tm^a$ at a temperature lower than $Tb$ to form a mixture, keeping the mixture at a temperature lower than $Tb$ for at least 10 minutes, kneading the mixture at a temperature lower than $Tb$ into a substantially uniform kneaded mixture and shaping the substantially uniform kneaded mixture into a film at a temperature lower than $Tb$,

B. preliminarily mixing 10 to 95 parts by weight of a thermoplastic resin (a) having a melting point or melting starting temperature $Tm^a$ and 5 to 150 parts by weight, per 100 parts by weight of said thermoplastic resin (a), of a solvent (c) at a temperature lower than $Tm^a$, keeping the resultant preliminary mixture at a temperature lower than $Tm^a$ for at least 10 minutes, adding 5 to 90 parts by weight of a functional substance having a property-change temperature $Tb$ equal to or lower than $Tm^a$ to the above preliminary mixture, kneading the resultant mixture at a temperature lower than $Tb$ to form a substantially uniform kneaded mixture and shaping the substantially uniform kneaded mixture into a film, and

C. removing the solvent (c) from the film.

EP 0 480 677 A2

Field of the Invention

The present invention relates to a novel functional resin film which is formed from a thermoplastic resin, in particular an engineering plastic, as a base material, and a process for producing such a novel functional resin film [present invention (1) hereinafter].

Further, the present invention relates to a novel film or fiber which is formed from a thermoplastic polyphenylene ether resin as a base material, and a process for producing such a novel film or fiber [present invention (2) hereinafter].

According to the process of the present invention (1), a functional film can be produced from a thermoplastic resin at a remarkably lower temperature than the heat-molding temperature of the thermoplastic resin. Therefore, a substance which is easily changed in properties due to heat can be incorporated into a thermoplastic resin without impairing its properties, and a film can contain a functional substance in the state of a uniform dispersion as a result of the formation of a moist clay-like kneaded mixture as an intermediate.

According to the present invention (1), therefore, there can be obtained a film having functions of a substance which is liable to change in properties due to heat. For example, a thermosetting film (B-staged film) can be produced by incorporating a thermosetting resin. Thus, the process of the present invention (1) can apply to the production of films containing a variety of functional substances.

According to the process of the present invention (2), a polyphenylene ether resin film or fiber can be produced from a polyphenylene ether resin at a remarkably lower temperature than the temperature for molding the polyphenylene ether resin (melting temperature). Therefore, the resin does not suffer thermal deterioration such as gelation and carbonization. Further, a moist clay-like kneaded mixture is formed as an intermediate, and a film or fiber is produced from the intermediate. As a result, the film or fiber can contain a uniform dispersion of a substance having a greatly different specific gravity or a substance which is liable to undergo phase separation at the melting temperature.

Prior Art of the Invention

A thermoplastic resin film is generally produced by a melt-extrusion method in which a molten resin is extruded through a T-die and the resultant film is oriented with rolls, or by a casting method using a solution for a thermoplastic resin film.

In the former melt-extrusion method, a thermoplastic resin is melted under heat and extruded to form a film. For this reason, substances which the film can contain are limited to those which substantially do not change in properties at the extrusion temperature of the thermoplastic resin. It is therefore substantially impossible to produce films containing a thermally reactive substance such as a thermosetting resin, a photochromic substance, or a substance having no heat resistance such as enzymes and biopolymers.

In the latter casting method, a film is formed by casting a solution containing a thermoplastic resin and a solvent and removing the solvent. It is hence, in principle, possible to incorporate into the solution a substance which is liable to change in properties due to heat when the temperature required for the solvent removal is sufficiently low. However, when the substance to be incorporated is not fully compatible with the resin, or when the amount of the substance incorporated is not sufficiently small, the substance incorporated is liable to be localized during the solvent removal. Therefore, the casting method is unsuitable for producing a film having a functional substance uniformly incorporated.

Meanwhile, as a so-called "IPN (interpenetrating polymer network)" has attracted attention, studies are under way to put to practical use a film obtained by uniformly incorporating a thermosetting resin, etc., into an engineering plastic as a base material, since such a film can highly probably exhibit novel functions.

For example, in the field of electric and electronic materials, it is desired to develop a resin which has mechanical and electrical properties of a thermoplastic resin, a low dielectric constant and a low dielectric dissipation factor in particular, and which also has heat resistance and secondary formability of a thermosetting resin.

A polyphenylene ether resin is excellent in heat resistance and electrical properties. However, it has a high melting temperature and a high melt viscosity, and it is poor in thermal stability. That is, the melting temperature of a polyphenylene ether resin is very close to the thermal deterioration temperature thereof. Therefore, a molding material which can be said to substantially contain a polyphenylene ether resin alone has not been conventionally available. And, a sheet or a film could not have been produced from a polyphenylene ether resin by an extrusion method, since gelation takes place and a carbide is formed during the extrusion of the polyphenylene ether resin due to thermal deterioration of the polyphenylene ether resin.

In a casting method, a film is produced by casting a solution containing a polyphenylene ether resin and a solvent and removing the solvent. However, it has not been possible to produce a film containing a uniform dispersion of an additive of which the specific gravity is greatly different from that of the polyphenylene ether resin or an additive of which the affinity to the solvent is poor.

Summary of the Invention

It is an object of the present invention to provide a novel functional resin film in which a functional substance which is liable to change in properties due to heat is uniformly dispersed in a thermoplastic resin.

It is another object of the present invention to provide a novel functional resin film produced at a remarkably lower temperature than the temperature for molding a thermoplastic resin.

It is further another object of the present invention to provide processes for producing the above functional resin films.

Further, it is another object of the present invention to provide a novel polyphenylene ether resin film or fiber produced at a remarkably lower temperature than the temperature for molding a thermoplastic polyphenylene ether resin.

It is another object of the present invention to provide a polyphenylene ether resin film or fiber produced without causing thermal deterioration on a polyphenylene ether resin.

It is further another object of the present invention to provide a polyphenylene ether resin film or fiber in which a substance which has a greatly different specific gravity from that of a polyphenylene ether resin or a substance which is liable to undergo phase separation at the melting temperature of a polyphenylene ether resin is uniformly dispersed in the polyphenylene ether resin.

It is still further another object of the present invention to provide processes for producing the above polyphenylene ether resins.

According to the present invention (1), there is provided a thermoplastic resin-based functional film obtained by mixing and kneading 10 to 95 parts by weight of a thermoplastic resin (a) having a melting point or melting starting temperature $Tm^a$, 5 to 90 parts by weight of a functional substance having a property-change temperature Tb equal to or lower than $Tm^a$, and 5 to 150 parts by weight, per 100 parts by weight of said thermoplastic resin (a), of a solvent (c) at a temperature lower than Tb to form a substantially uniform kneaded mixture, shaping the substantially uniform kneaded mixture into a film and removing the solvent (c).

According to the present invention (1), there is also provided a process for producing a functional resin film, which comprises the following steps either A or B and C:

A. mixing 10 to 95 parts by weight of a thermoplastic resin (a) having a melting point or melting starting temperature $Tm^a$, 5 to 150 parts by weight, per 100 parts by weight of said thermoplastic resin (a), of a solvent (c) and 5 to 90 parts by weight of a functional substance having a property-change temperature Tb equal to or lower than $Tm^a$ at a temperature lower than Tb to form a mixture, keeping the mixture at a temperature lower than Tb for at least 10 minutes, kneading the mixture at a temperature lower than Tb into a substantially uniform kneaded mixture and shaping the substantially uniform kneaded mixture into a film at a temperature lower than Tb,

B. preliminarily mixing 10 to 95 parts by weight of a thermoplastic resin (a) having a melting point or melting starting temperature $Tm^a$ and 5 to 150 parts by weight, per 100 parts by weight of said thermoplastic resin (a), of a solvent (c) at a temperature lower than $Tm^a$, keeping the resultant preliminary mixture at a, temperature lower than $Tm^a$ for at least 10 minutes, adding 5 to 90 parts by weight of a functional substance having a property-change temperature Tb equal to or lower than $Tm^a$ to the above preliminary mixture, kneading the resultant mixture at a temperature lower than Tb to form a substantially uniform kneaded mixture and shaping the substantially uniform kneaded mixture into a film, and

C. removing the solvent (c) from the film.

Further, according to the present invention (2), there is provided a polyphenylene ether resin film or fiber obtained by mixing 100 parts by weight of a polyphenylene ether resin and 5 to 150 parts by weight of a solvent at a temperature lower than the melting point or melting starting temperature $Tm^a$ of said polyphenylene ether resin to form a mixture, keeping the mixture at a temperature lower than $Tm^a$ for at least 10 minutes, kneading the mixture to form a kneaded mixture, shaping the kneaded mixture into a film or fiber at a temperature lower than $Tm^a$, and removing the solvent.

According to the present invention (2), there is also provided a process for producing a film or fiber, which comprises:

preliminarily mixing 100 parts by weight of a polyphenylene ether resin and 5 to 150 parts by weight of a solvent at a temperature lower than the melting point or melting starting temperature $Tm^a$ of said polyphenylene ether resin to form a mixture,

keeping the mixture at a temperature lower than $Tm^a$ for at least 10 minutes,

kneading the mixture at a temperature lower than said temperature $Tm^a$ to form a kneaded mixture,

shaping the kneaded mixture into a film or fiber at a temperature lower than Tm$^a$, and removing the solvent.

Detailed Description of the Invention

The present inventors have found that a semi-solid uniform mixture of a thermoplastic resin powder, e.g. a polyphenylene resin powder with a solvent shows mold releasability or surface lubricity at a temperature lower than a specific temperature determined depending upon the solvent amount (with an increase in the amount of the solvent, the surface lubricity decreases, and with an increase in temperature, the surface lubricity decreases), and can be shaped into a film at a temperature lower than the melting point of the thermoplastic resin. On the basis of this finding, the present invention has been completed.

The thermoplastic resin having a melting point or a melting starting temperature of Tm$^a$, used in the present invention, is not specially limited as far as it shows swelling properties when mixed with a solvent having a boiling point of not more than 130°C. Industrially preferred are thermoplastic resins for which generally used solvents are usable. The present invention (1) is important in that films imparted with functions can be obtained, and the present invention (1) can be suitably applied to the production of films particularly when it is difficult to uniformly mix functional substances with resins due to molding temperature conditions. From this point of view, the present invention (1) can be suitably applied to the production of films from the engineering plastics, such as poly(2,6-dimethyl-1,4-phenylene ether), poly(2,6-diethyl-1,4-phenylene ether), poly(2-dimethyl-6-ethyl-1,4-phenylene ether). poly(2-dimethyl-6-propyl-1,4-phenylene ether), a 2,6-dimethylphenol/2,3,6-trimethylphenol copolymer, a 2,6-diethylphenol/2,3,6-trimethylphenol copolymer, a 2,6-dipropylphenol/2,3,6-trimethylphenol copolymer, and a styrene graft copolymer obtaininged by adding styrene to poly(2,6-dimethyl-1,4-phenylene ether) or a 2,6-dimethylphenol/2,3,6-trimethylphenol copolymer. In particular, the present invention (1) can be suitably applied to the production of films from a polyphenylene ether resin obtained by adding maleic acids or maleimide to poly(2,6-dimethyl-1,4-phenylene ether) or a 2,6-dimethylphenol/2,3,6-trimethylphenol copolymer; polycarbonates such as bisphenol A polycarbonate and others; polyester carbonate; and polysulfone. Of these, the present invention (1) is preferably suitable for a polyphenylene ether resin, a polycarbonate resin and a polyester carbonate resin for which generally used solvents are usable, and particularly preferably suitable for a polyphenylene ether resin.

The above resins are mixed with a solvent when used, and it is therefore preferred to use such resins in the form of a powder having a particle diameter of 0.3 mm or less. Resins having a number average molecular weight of 7,000 to 50,000, particularly 10,000 to 30,000 are easily commercially available, and such resins are usable in the present invention (1). In the process of the present invention (1), however, a resin having a number average molecular weight of more than 50,000 can be also used, since a mixture suitable for use can be prepared, by mainly adjusting the solvent amount, from even a high-molecular-weight, particularly ultrahigh-molecular-weight resin which exhibits a high solution viscosity and a high melt viscosity.

The functional substance having a property-change temperature Tb equal to or lower than the melting point or melting starting temperature Tm$^a$ of the thermoplastic resin refers to a substance which changes in properties, ie. undergoes a chemical change such as crosslinking, polymerization, decomposition, isomerization, or the like at a temperature equal to or higher than the property-change temperature Tb and substantially loses its functions, or a substance which has a risk of causing a run-away reaction at a temperature equal to or higher than Tb. The property-change temperature is preferably higher than room temperature. The functional substance is selected from thermosetting resins, photo-setting resins, heat-reactive substances (such as thermally expandable capsules and thermally color-changing dyestuffs), photo-reactive substances, polymer decomposers, substances from a living body (such as proteins, starch, sugar, enzymes, DNA, amino acids and hormones), and microorganisms. Some of substances from a living body and some of microorganisms perish or change in properties due to a solvent or when physically kneaded with a resin, i.e. their inherent functions are lost. It is therefore undesirable to incorporate such substances. The functional substances such as heat-reactive substances (thermal expandable capsules, thermally color-changing dyestuffs, etc.), photo-reactive substances and polymer decomposers are suitably used according to use of products.

In view of industrial fields at present, the incorporation of thermosetting resins and photo-setting resins are particularly desired.

Examples of the above thermosetting resins are an unsaturated polyester resin, a phenolic resin, a diallyl phthalate resin, an epoxy resin, a polyamine-bismaleimide resin, a polymaleimide-epoxy resin, a polymaleimide-iscyanate resin, a cyanato resin, a cyanate-epoxy resin, a cyanate-polymaleimide resin, a cyanate-epoxy-polymaleimide resin, a cyanate-polyamine resin, a bismaleimide and polymaleimide [prepared by maleimidation of an amino group of a low-molecular-weight polyamine obtained from methylene-bonding of aniline] These thermosetting resins may be used alone or in combination. Further, there may be used a compound which are reactive with these thermosetting resins. Such a compound is selected from compounds having an olefinically unsaturated double bonds such as triallyl isocyanurate, triacryloyl isocyanate and bis(4-allyoxyphenyl)propane; 1,2-polybutadiene and other liquid rubbers. Examples of the photo-setting resins are compounds having an acryloxy group and an acryloyl group; and stilbene.

Specific examples of the thermosetting resin are preferably epoxy resins such as a bisphenol A type resin [2,2-bis(4-glycidoxyphenylpropane or an epoxy resin based on this compound], a bisphenol F type resin [bis(4-glycidoxyphenyl)methane or an epoxy resin based on this compound], a phenol novolak type epoxy resin, a cresol novolak type epoxy resin, a tetrabromobisphenol A type epoxy resin, 1,1,1-tris(4-glycidoxyphenyl)methane, 1,1,2-tris(4-glycidoxyphenyl)ethane and N,N,N′,N′-tetraglycidyl-aminomethylbenzene; specific examples of the cyanate resin are preferably 1,2-, 1,3- or 1,4-dicyanatophenylbenzene; 2,2-bis(4-cyanatophenyl)propane; 2,2-bis(3,5-dimethyl-4-cyanatophenyl)propane, and bis(4-cyanatophenyl)methane, a cyanic acid-esterification resin obtained by a reaction between a compound having at least three phenolic hydroxyl groups such as phenol novolak and halogenated cyan, cyanato resins obtained by subjecting these compounds into a preliminary reaction for forming a sym-triazine ring by heating or in the presence of a catalyst, and resins containing these compounds as a main component.

When a polyphenylene ether resin is used as a thermoplastic resin, particularly preferred is a cyanato resin. When a polycarbonate resin is used as a thermoplastic resin, preferred are a cyanato resin and an epoxy resin. When these thermosetting resins and photosetting resins are used, it is preferred to use a known aid such as a curing agent, a curing catalyst or photo-initiator, a photosensitizer, etc, in order to adjust the curability of these resins. The thermosetting catalyst is preferably selected from organometallic salts such as zinc octylate, alkyl tin oxide, carboxylate of alkyl tin oxide, iron acetylacetonate; metal compounds such as organic metal chelate; and peroxides.

The solvent used in the present invention is a solvent for the thermoplastic resin, which has a boiling point of not more than 130°C and brings the thermoplastic resin into a swollen state. The solvent is practically selected from generally usable solvents, and specifically selected from aromatic hydrocarbons such as toluene and xylene; halogenated hydrocarbons such as chloroform, trichloroethane, dichloromethane and chlorobenzene; and ketones, esters and ethers such as methyl ethyl ketone and ethyl acetate.

The present invention (1) uses the above thermoplastic resin, the above functional substance and the above solvent as an essential component. However, there may be used a known filler, a known reinforcing material, a known dye or pigment and other component as required in order to improve the dimensional stability, etc., of a film as a product. When it is intended to use a film containing a thermosetting resin as a functional substance in an electric and electronic component, etc., a fiber or powder of a fluorine-containing resin such as Teflon, synthetic mica or fluorinated mica, boron nitride, a glass (E-glass, D-glass, S-glass, T-glass, or silica glass.) powder or fiber, etc., are preferred as a filler. In particular, in order to obtain a film having a low dielectric properties, preferred are a fluorine resin, synthetic or fluorinated mica, silica glass, boron nitride, etc. In order to obtain a film having a high dielectric constant and a low dielectric dissipation factor, preferred are ceramics for a dielectric, which are known to be for condensers (see, eg. "Kagakubinran, Ohyohen" page 1,020). The above fillers, etc., preferably have a particle diameter of up to 5 μm.

The process of the present invention comprises preparing a uniform kneaded mixture from the thermoplastic resin, the functional substance and the solvent as an essential component, forming the kneaded mixture into a sheet, forming the sheet into a film and removing the solvent.

In the present invention, the thermoplastic resin (a)/functional substance (b) mixing ratio is 10 to 95 parts by weight/5 to 90 parts by weight, preferably 60 to 90 parts by weight/10 to 40 parts by weight.

The amount of the solvent (c) per 100 parts by weight of the thermoplastic resin (a) is 5 to 150 parts by weight, preferably 5 to 30 parts by weight.

To describe the process of the present invention according to functions as one embodiment, the process comprises the steps of:

preparing a kneaded mixture,

forming the kneading mixture into a sheet and then into a film, and

removing the solvent.

The process typically comprises:

step 1:

preliminarily mixing 10 to 95 parts by weight of a thermoplastic resin (a) having a melting point or melting starting temperature $Tm^a$ and 5 to 150 parts by weight, per 100 parts by weight of said thermoplastic resin (a), of a solvent (c) at a temperature not higher than $Tm^a$ [preliminary mixing (1)],

step 2:

keeping the mixture at a temperature lower than $Tm^a$ for at least 10 minutes, and

step 3:

adding 5 to 90 parts by weight of a functional substance having a property-change temperature Tb equal to or lower than $Tm^a$ at a temperature lower than Tb, kneading the mixture at a temperature lower than Tb to form a substantially uniform kneaded mixture.

As another embodiment, the process comprises:

step 1:

preliminarily mixing 10 to 95 parts by weight of a thermoplastic resin (a) having a melting point or melting starting temperature $Tm^a$, 5 to 90 parts by weight of the above functional substance (b) and 5 to 150 parts by weight, per 100 parts by weight of said thermoplastic resin (a), of a solvent (c) at a temperature not higher than Tb [preliminary mixing (2)],

step 2:

keeping the mixture at a temperature lower than Tb for at least 10 minutes, and

step 3:

kneading the mixture to form a uniform kneaded mixture.

The difference between the above two embodiments is that the functional substance is added at a different time. As a result, the temperature differs between the preliminary mixing (1) and the preliminary mixing (2). However, the above two embodiments can be said to be the same except for these differences. The step of keeping the mixture after the preliminary mixing (1) or (2) includes allowing the mixture to stand (with or without refluxing a solvent at a temperature not lower than the boiling point of the solvent), keeping the mixture with stirring, and the like. In this step, the solvent works to disperse the functional substance in the thermoplastic resin substantially uniformly.

Thereafter, in general, the above-obtained kneaded mixture is molded into a sheet, and further, the sheet is shaped into a film having a thickness of 5 to 200 µm, preferably 10 to 30 µm by stretching under pressure, orienting, etc. Then, the step of removing the solvent under reduced pressure (the higher the degree of pressure reduction is, the more effective it is), whereby the film of the present invention (1) is obtained. It is preferred to remove the solvent under reduced pressure at a temperature lower than the property-change temperature Tb.

A film is formed by any one of the following methods, i.e. a method in which a sheet is first formed, and the sheet is stretched with rolls under pressure or oriented, and at the same time, or thereafter, the solvent is removed (dried); a method in which the above-obtained sheet is placed between surface-lubricant films of polyethylene terephthalate, polypropylene, polyethylene or polyvinylidene fluoride and stretched under pressure or oriented, and the solvent is removed; and a method in which, differing from the order of the above steps according to the functions, the kneading step is carried out in a T-die extruder to extrude the kneaded mixture in a sheet form, the sheet is stretched under pressure or oriented and at the same time or thereafter, the solvent is removed (dried). When a plastic film having surface lubricity is not used in the above step, it is required to select a temperature at which the uniform kneaded mixture shows surface lubricity, and the stretching under pressure or the orienting is generally carried out at a low temperature. When the solvent is removed with stretching the sheet under pressure or orienting the sheet, the temperature at which the sheet shows surface lubricity increases gradually. Therefore, the stretching or orienting step can be carried out with gradually increasing the temperature.

The process of the present invention (1) is not necessarily carried out according to the order of the above steps, and can be changed as far as the uniform kneaded mixture can be substantially prepared.

The functional resin film of the present invention (1) can be produced as described above, whereby the function of the functional substance can be utilized. For example, a film containing a functional substance from a living body is utilized as it is, and a single film or a plurality of films containing a thermosetting resin or photo-setting resin is/are used, in general, for adhesion, shaping, etc., to use the function(s) of the functional substance(s).

Further, for or example, when films are produced from a polyphenylene ether resin as a thermoplastic resin and a thermosetting cyanato resin as a functional resin according to the process of the present invention (1), the following three types of films can be produced by controlling the conditions for removal of the solvent used, i.e. a film in which the cyanato resin component which is substantially not reacted is uniformly dispersed in the polyphenylene ether resin, a film in a so-called "B-stage" in which part of the cyanato resin has been preliminarily reacted, and a film which is cured by a complete crosslinking reaction of the cyanato resin. In particular, a B-staged film, which is cured under heat, exhibits excellent adhesion strength with a resin, ceramics and metals. Further, the cured resin layer has excellent electrical properties and resistance to soldering heat. Such a film is therefore suitable as a film for electric and electronic parts.

The functional resin film of the present invention (1) has its characteristic feature in a uniform dispersion of the functional substance having a property-change temperature Tb equal to or lower than the melting point or melting starting temperature $Tm^a$ of the thermoplastic resin used as a base material.

The above characteristic feature is achieved when there is obtained a uniform kneaded mixture which comprises the thermoplastic resin as a base material, the functional substance and the solvent for the thermoplastic resin and which is not a solution but has the same capability of forming a uniform film as a solution.

The present invention (1) in which the uniform kneaded mixture is prepared and used is easily understood by reference to the process for making a pie pastry. A dough mixture for a pie pastry has very little adhesion to a work table, a container, a hand, a rolling pin, etc., i.e. substantially has surface lubricity. Butter is spread over the surfaces of substantially surface-lubricant pie sheets stretched on a work table and the pie sheets are stacked one on another to give a sheet-like pastry consisting of many layers having a very small thickness each. Even after the pastry is baked, the layers forming a stack are observable.

In the process of the present invention (1), the thermoplastic resin in the kneaded mixture corresponds to the gluten of flour and egg as a binder, the functional substance corresponds to other components in flour such as starch, sugar and other additives, and the solvent corresponds to water. The step of keeping the preliminary mixture corresponds to "aging", during which the solvent for the thermoplastic resin is completely uniformly dispersed in the thermoplastic resin to bring the thermoplastic resin into a swollen state or mutually fused state. In this step a "solution" is not used. Since, however, the next step is carried out at a low temperature, this step is essential to impart the preliminary mixture with uniformity equivalent to that obtained with a solution. The kneaded mixture obtained by kneading the preliminary mixture is a uniform dispersion of the components and has stretchability under pressure or orientability and self-holding properties (film formability) at a specific temperature lower than a temperature to be determined depending upon the solvent amount. Moreover, at a temperature lower than the specific temperature above, the kneaded mixture has surface lubricity to rolls and films used for forming a sheet or a film therefrom.

Due to the above properties, a sheet which is a uniform dispersion of the components can be obtained at a lower temperature, and then a film is formed. The solvent is removed from the film, whereby a functional resin film can be obtained.

The present invention (2) will be described hereinafter.

The present inventors have made a diligent study to obtain a film, in which fillers and additives are uniformly dispersed, from a polyphenylene ether resin and as a result, found that a semi-solid uniform mixture of a polyphenylene ether resin powder with a solvent shows mold releasability or surface lubricity at a temperature lower than a specific temperature determined depending upon the solvent amount, and can be shaped into a sheet or a film. On the basis of this finding, the present invention has been completed.

The polyphenylene ether resin used in the present invention (2) refers to a known polymer obtained by oxidation polymerization of a phenol or a phenol derivative which has a lower alkyl group in the ortho (2-) position, hydrogen in the para (4-) position and hydrogen or a lower alkyl group in the other position. Specifically, the polyphenylene ether resin refers to polyphenylene ether resins described with regard to the present invention (1).

The polyphenylene ether resin preferably has a particle diameter, a molecular weight, etc., in the ranges described with regard to the present invention (1).

The solvent used in the present invention (2) is selected from aromatic hydrocarbons and halogenated hydrocarbons, and examples of these are as described with regard to the present invention (1). Further, the additive such as a filler used in the present invention (2) is also the same as those described with regard to the present invention (1). The amount of the additive is preferably 10 to 50 parts by weight per 100 parts by weight of the polyphenylene ether resin.

The process of the present invention (2) is generally classified, if classified according to functions, into a step of preparing a kneaded mixture and a step of forming a sheet or film from the kneaded mixture and removing a solvent.

The kneaded mixture is prepared by preliminary mixing a polyphenylene ether resin, a solvent and an additive, keeping the resultant mixture for at least 10 minutes, and kneading the mixture. The additive may be added after the kneaded mixture is prepared and before the mixture is kneaded.

Without the step of keeping the mixture, it is difficult to obtain a kneaded mixture in which the solvent is fully dispersed. As a result, it is sometimes difficult to shape the kneaded mixture into a sheet, film or fiber, or such a product sometimes has a many fine defects. This step of keeping the mixture includes allowing the kneaded mixture to stand, keeping the kneaded mixture with refluxing the solvent at a temperature not lower than the boiling point of the solvent, keeping the mixture with stirring, etc. This step of keeping the mixture is essential to uniformly disperse the solvent in the polyphenylene ether resin and to bring the mixture, which is not a solution under the mixing conditions, into a mixture state equivalent to a solution.

The present invention (2) has its characteristic feature in that the kneaded mixture is prepared at a temperature lower than the melting point or melting starting temperature $Tm^a$ of the polyphenylene ether resin.

The present invention (2) in which the uniform kneaded mixture is prepared and used is easily understood by reference to the process for making a pie pastry.

7

In the process of the present invention (2), the polyphenylene ether resin in the kneaded mixture corresponds to the gluten of flour and egg as a binder, the solvent corresponds to water, and the additive corresponds to other components in flour such as starch, sugar and other additives. The step of keeping the preliminary mixture corresponds to "aging", during which the solvent is completely uniformly dispersed in the polyphenylene ether resin to bring the polyphenylene ether resin into a swollen state and further into mutually fused state. Since the kneading temperature at the next step is lower than the melting point or melting starting temperature of the polyphenylene ether resin, this step is essential to impart the preliminary mixture with uniformity.

The functional resin film of the present invention is a film comprising a thermoplastic resin as a base material and a functional substance, in which the thermoplastic resin is imparted with properties of the functional substance. Thus, the functional resin film of the present invention can have unconventional desirable properties. Therefore, there are provided films which can be applied to a variety of use fields to which conventional films are considered not to be applied.

Differing from conventional processes for producing films from thermoplastic resins and thermosetting resins, the process of the present invention (1) is novel, and solves the problem of thermal deterioration when treating thermoplastic resins and thermosetting resins. Further, the process of the present invention (1) permits the production of homogeneous films, and therefore has great industrial importance.

The polyphenylene ether resin film or fiber of the present invention (2) is produced at a temperature below the melting point of the polyphenylene ether resin, i.e. without substantially having suffered thermal deterioration. And, the polyphenylene ether resin film or fiber of the present invention is produced through a moist clay-lake kneaded mixture, and it is therefore free from failure in dispersion of additives induced by a difference in specific gravity and poor affinity with a solvent.

Therefore, the present invention (2) can provide a polyphenylene ether resin film or fiber which fully maintains desirable properties of the polyphenylene ether resin, and hence has great industrial importance.

The present invention will be explained further in detail hereinafter by reference to Examples, in which "part" stands for "part by weight" unless otherwise specified.

Example 1

60 Parts of poly(2,6-dimethyl-1,4-phenylene ether) having a particle diameter of not more than 0.3 mm and an intrinsic viscosity, measured in chloroform at 25°C, of 0.46 dl/g, 20 parts of a 2,2-bis(4-cyanatophenyl)propane powder and 60 parts of toluene were preliminarily mixed with a Henschel mixer for 1 minute.

The resultant preliminary mixture was charged into a container having a refluxer and a stirrer, and kept under reflux with stirring at a temperature between 110°C and 120°C for 1 hour.

The so-kept mixture was kneaded with a kneading roll at 60°C for 2 minutes, and then taken out in the form of a sheet having a thickness of 1 mm. The sheet was stretched under pressure with a stretching roll at 150°C as a final to form a film having a thickness of 30 μm. The film was dried at 50°C at 10 mmHg for 5 hours to substantially remove the toluene, whereby a film (to be referred to "F1" hereinafter) was obtained.

Example 2

60 Parts of the same polyphenylene ether resin powder as that used in Example 1 and 30 parts of toluene were preliminarily mixed with a Henschel mixer, and the resultant mixture was charged into a container having a refluxer and a stirrer and kept in the container under reflux with stirring at a temperature between 120°C and 140°C for 1 hour.

Thereafter, 20 parts of a 2,2-bis(4-cyanatophenyl)propane powder and 0.03 part of iron acetylacetonate were added to the preliminary mixture, and the resultant mixture was kneaded with a kneading roll at 120°C for 2 minutes and taken out in the form of a sheet having a thickness of 1 mm. A polyethylene terephthalate films having a thickness of 50 μm was placed on each surface of the sheet, and the sheet was oriented with an orientation roll at 80°C to form a film having a thickness of 15 μm. The polyethylene terephthlate films were peeled off, and the resultant film was dried at 50°C at 10 mmHg for 5 hours to substantially remove the toluene, whereby a film (to be referred to as "F2" hereinafter) was obtained.

Example 3

50 Parts of a polyphenylene ether copolymer having a particle diameter of not more than 0.3 mm and an intrinsic viscosity, measured in chloroform at 25°C, of 0.57 dl/g (a copolymer from 95 mol% of 2,6-dimethylphenol and 5 mol% of 2,3,6-trimethylphenol), 20 parts of a prepolymer powder prepared by preliminarily reacting a 2,2-bis(4-cyanatophenyl)propane at 160°C for 3 hours, and 50 parts of toluene were preliminarily mixed with a Henschel mixer.

The resultant preliminary mixture was charged into a container, and after the container was tightly closed, the mixture was kept at 25°C for 4 hours.

0.05 Part of tin acetylacetonate was added to the above mixture, and the mixture was kneaded with a kneading roll at 60°C for 2 minutes and taken out in the form of a sheet having a thickness of 1 mm. A polypropylene film having a thickness of 25 μm was placed on each surface of the sheet, and the sheet was oriented with an orientation roll at 135°C to form a 15 μm thick, B-staged film in which the 2,2-bis(4-cyanatophenyl)propane prepolymer was further reacted. The polypropylene films were peeled off, and the oriented film was dried at 50°C at 10 mmHg for 5 hours to substantially remove the toluene, whereby a film (to be referred to as "F3" hereinafter) was obtained.

Separately, the same preliminary mixture as that described above was directly kneaded without keeping it in a container, and an attempt was made to shape the kneaded mixture into a sheet and orient the sheet in the same manner as above. However, the resultant sheet was not homogeneous.

Examples 4 - 6

The same polyphenylene ether powder as that described in Example 3 [Component (a)], the same 2,2-bis(4-cyanatophenyl)propane prepolymer powder as that described in Example 3 [Component (b)] and toluene [Component (c)], of which the amounts are shown below, were preliminarily mixed at 25°C, and the resultant mixture was kept at 25°C for 4 hours. Thereafter, zinc octylate [Component (d)] in an amount shown below was added to the mixture, and the mixture was kneaded with a kneading roll for 2 minutes, and taken out in the form of a sheet having a thickness of 1 mm. A polypropylene film having a thickness of 25 μ was placed on each surface of the sheet, and the sheet was oriented with an orientation roll at 135°C to form a 15 μm thick, B-staged film in which the 2,2-bis(4-cyanatophenyl)propane prepolymer was further reacted. The polypropylene films were peeled off, and the oriented film was dried at 50°C at 10 mmHg for 5 hours to substantially remove the toluene, whereby a film (to be referred to as "F3" "F4" or "F5" hereinafter) was obtained.

| Abbreviation for film | Component (a) | Component (b) | Component (c) | Component (d) |
|---|---|---|---|---|
| F4 | 30 parts | 90 parts | 30 parts | 0.1 part |
| F5 | 30 parts | 90 parts | 30 parts | 0.05 part |
| F6 | 30 parts | 90 parts | 30 parts | 0.02 part |

Comparative Example 1

60 Parts of the same polyphenylene ether powder as that described in Example 3 and 20 parts of the same 2,2-bis(4-cyanatophenyl)propane prepolymer powder as that described in Example 3 were dissolved in toluene to prepare a solution having a concentration of 15 %.

The above solution was cast on a glass sheet with a doctor blade, and the cast product was dried with an infrared lamp for 10 minutes. The resultant film was peeled off in water to give a B-staged film. The B-staged film was dried under reduced pressure in the same manner as in Example 3 to give a film (to be referred to as "CF1" hereinafter).

Example 7

The above-obtained films F1 to F6 and CF1 were respectively arranged to have a thickness of 30 μm with one film or by folding one film into two. Then, an electrolytic copper foil having a thickness of 35 μm was placed on each surface of each of the films, and the resultant laminates were press-formed at 200°C for 30 minutes to give double-surface copper-clad films.

These double-surface copper-clad films were measured for a copper foil peel strength (peel: kg/cm), a resistance to soldering heat at 260°C for 20 seconds (A: no swelling, B: slightly swollen and X: swollen), a glass transition temperature (Tg) and a dielectric constant ($\varepsilon$). Table 1 shows the results.

9

| Film | | Peel kg/cm | Resistance to soldering heat | Tg °C | ε |
|------|---|------------|------------------------------|-------|---|
| Ex.1 | F1 | 1.7 | B | 179 | 2.6 |
| Ex.2 | F2 | 1.9 | A | 191 | 2.6 |
| Ex.3 | F3 | 2.2 | A | 192 | 2.6 |
| Ex.4 | F4 | 1.7 | A | 216 | 2.9 |
| Ex.5 | F5 | 1.9 | A | 208 | 2.8 |
| Ex.6 | F6 | 2.3 | A | 192 | 2.7 |
| CEx.1 | CF1 | 1.4 | X | 170 | 2.6 |

Ex. = Example    CEx. = Comparative Example

Example 8

An inter layer pattern was formed on a 0.1 mm thick glass epoxy laminate (FR4) of which each surface was clad with an electrolytic copper foil having a thickness of 18 μm according to a known method to obtain an internal layer sheet.

Two films from the film F3 obtained in Example 3 were stacked on each of the above internal layer sheet, and further, an electrolytic copper foil having a thickness of 18 μm was stacked on each surface of the resultant sheet. The resultant laminate was press-formed at a temperature of 240°C at a cylinder pressure of 20 kg/cm$^2$ in an atmosphere under 20 mmHg for 2 hours to give a multi-layered print board having a thickness of 0.16 mm and four copper layers.

The above-obtained multi-layered printed circuit board showed resistance to soldering heat at 280°C for more than 20 seconds. No voids were observed in any internal layers.

Example 9

Two films from the film F6 obtained in Example 6 were stacked on one surface of a 1 mm thick ceramic substrate for a printed circuit board, and an electrolytic copper foil having a thickness of 9 μm was stacked on the film. The resultant laminate was press-formed at 240°C at a cylinder pressure of 20 kg/cm$^2$ in an atmosphere under 20 mmHg for 1 hour to give a one-surface copper-clad plate.

A print circuit pattern was formed on the above-obtained copper-clad plate, and the copper foil surface forming the print circuit pattern was subjected to black oxidation treatment. Thereafter, two films from the film F6 and a 9 μm thick electrolytic copper foil were stacked on the copper-clad plate, and the resultant laminate was press-formed in the same manner as above. And, a print circuit pattern was also formed on the press-formed laminate, and the copper foil surface forming the print circuit pattern was subjected to black oxidation treatment to give a print circuit board.

Separately, two films F6 were attached to each other, and a 9 μm thick electrolytic copper foil was placed on each surface of the resultant combined films F6. The resultant laminate was press-formed in the same manner as above to obtain a double-surface copper-clad sheet having a thickness of 0.03 mm, and through holes were made in the double-surface copper-clad sheet with a drill having a drill diameter of 0.1 mm. And, the through holes were plated according to a known method, a print circuit pattern was formed, and the copper foil forming the circuit pattern was subjected to black oxidation treatment to give a print circuit sheet.

Two films from the film F6 were stacked on the above print circuit board having the ceramic substrate, and the above print circuit sheet having through holes were stacked thereon under registration of the print circuit patterns. Further, two films from the film F6 and a 9 μm thick electrolytic copper foil were stacked on the print circuit sheet, and the resultant laminate was press-formed in the same manner as above.

Holes were made in predetermined positions of the resultant print circuit board having the ceramic substrate with a drill having a drill diameter of 0.2 mm until the holes reached the copper foil nearest to the ceramic substrate, and the resultant through holes were plated according to a known method. A print circuit pattern was formed on the outermost electrolytic copper foil to give a multi-layered printed circuit board having a total thickness of 0.15 mm and 5 resin insulating layers.

The resultant multi-layered printed circuit board showed resistance to soldering heat at 280°C for more than 20 seconds, and no voids were observed in any internal layers.

Example 10

50 Parts of a bisphenol A polycarbonate resin powder (Iupiron[R] S-2000, number average molecular weight = about 12,000),

16 parts of a bisphenol A type epoxy resin, 4 parts of 2,2-bis(4-cyanatophenyl)propane, 4 parts of a hindered amine type ultraviolet light absorber (CHIMASSORB[R]944) and 30 parts of methylene chloride were preliminarily mixed with a Henschel mixer for 1 minute.

The resultant preliminary mixture was kept at 25°C for 5 hours, and then kneaded with a kneading roll at 60°C for 2 minutes and taken out in the form of a sheet having a thickness of 1 mm. A polypropylene film was placed on each surface of the resultant sheet, and the sheet was oriented with an orientation roll with a final temperature of 135°C to obtain a film having a thickness of 15 $\mu$m. The film was dried at 50°C at 10 mmHg for 2 hours, whereby a film from which methylene chloride had been substantially removed was obtained.

The above-obtained film was stacked on one surface of a polycarbonate resin sheet having a thickness of 0.2 mm and attached thereto under pressure at 120°C. Then, a silicon-containing hard coat coating composition was coated on the film, and cured together with the above film under heat at 120°C to give a hard-coated polycarbonate sheet.

The above-obtained polycarbonate sheet was excellent in heat resistance over conventional polycarbonate sheets having acrylic primer layers, since the above hard coat layer was formed through the intermediate layer (film) having higher heat resistance than a polycarbonate resin.

Example 11

100 Parts of poly(2,6-dimethyl-1,4-phenylene ether) having a particle diameter of not more than 0.3 mm and an intrinsic viscosity, measured in chloroform at 25°C, of 0.46 dl/g and 50 parts of toluene were preliminarily mixed with a Henschel mixer for 1 minute.

The resultant preliminary mixture was charged into a container having a refluxer and a stirrer, and kept under reflux with stirring at a temperature between 120°C and 140°C for 1 hour.

The above-kept mixture was kneaded with a kneading roll for 2 minutes, and taken out in the form of a sheet having a thickness of 1 mm. The sheet was stretched under pressure with a final temperature at 150°C to form a film having a thickness of 30 $\mu$m, and the film was dried at 120°C at 10 mmHg for 5 hours, whereby a film from which the toluene had been substantially removed was obtained.

Example 12

100 Parts of the same polyphenylene ether resin as that described in Example 11, 50 parts of toluene and 30 parts of fluorinated mica of which the surface was treated with a methyl ethyl ketone solution containing 0.5 % of 2,2-bis(4-cyanatophenyl)propane were preliminarily mixed with a Henschel mixer, and the resultant preliminary mixture was charged into a container having a refluxer and a stirrer and kept in the container under reflux with stirring at a temperature between 120°C and 140°C for 1 hour.

Thereafter, the above-kept preliminary mixture was kneaded with a kneading roll at 140°C for 2 minutes and taken out in the form of a sheet having a thickness of 1 mm. A polyethylene terephthalate film having a thickness of 50 $\mu$m was placed on each surface of the sheet, and the sheet was oriented with an orientation roll at 90°C to give a film having a thickness of 15 $\mu$m. The polyethylene terephthalate films were peeled off, and the film was dried at 50°C at 10 mmHg for 5 hours, whereby a film from which the toluene had been substantially removed was obtained.

Example 13

Example 12 was repeated except that the polyphenylene ether powder was replaced with a polyphenylene ether copolymer having a particle diameter of not more than 0.3 mm and an intrinsic viscosity, measured in chloroform at 25°C, of 0.57 dl/g (from 95 mol% of 2,6-dimethylphenol and 5 mol% of 2,3,6-trimethylphenol), whereby a film was obtained.

Comparative Example 2

A solution having a resin concentration of 15 % was prepared from the same starting materials as those described in Example 12.

The above solution was cast on a glass plate with a doctor blade, and the cast product was dried with an infrared light for 10 minutes. The resultant film was peeled off.

The above-obtained film was nonhomogeneous even when visually observed.

## Claims

1. A process for preparing a thermoplastic resin-based functional film which comprises mixing and kneading 10 to 95 parts by weight of a thermoplastic resin (a) having a melting point or melting starting temperature $Tm^a$, 5 to 90 parts by weight of a functional substance (b) having a property-change temperature Tb equal to or lower than $Tm^a$, and 5 to 150 parts by weight, per 100 parts by weight of said thermoplastic resin (a), of a solvent (c) at a temperature lower than Tb to form a substantially uniform kneaded mixture, shaping the substantially uniform kneaded mixture into a film and removing the solvent (c).

2. A process according to claim 1, wherein the solvent (c) has a boiling point of not more than 130°C and brings the thermoplastic resin into a swollen state.

3. A process according to claim 1 or 2, wherein the thermoplastic resin (a) is an engineering plastic.

4. A process according to claim 3, wherein the engineering plastic is a polyphenylene ether resin.

5. A process according to any one of the preceding claims wherein the thermoplastic resin (a) has an average particle diameter of not more than 0.3 mm.

6. A process according to any one of the preceding claims wherein the functional substance (b) is at least one of a thermosetting resin, a photo-setting resin, a heat-reactive substance, a photo-reactive substance, a polymer decomposer, a substance from a living body and a microorganism.

7. A process according to claim 6, wherein the substance from a living body is at least one of proteins, starch, sugars, enzymes, DNA, amino acids and hormones.

8. A process according to any one of claims 1 to 5 wherein the functional substance (b) is a cyanate resin.

9. A process according to any one of the preceding claims, wherein the film is 5 to 200 $\mu$m thick.

10. A process according to any one of the preceding claims, wherein the substantially uniform kneaded mixture is formed by mixing and kneading 60 to 90 parts by weight of the thermoplastic resin (a), 10 to 40 parts by weight of the functional substance (b) and 5 to 30 parts by weight, per 100 parts by weight of the thermoplastic resin (a), of the solvent (c).

11. A process according to any one of the preceding claims wherein the substantially uniform kneaded mixture is formed by mixing (a), (b) and (c) at a temperature lower than Tb to form a mixture, keeping the mixture at a temperature lower than Tb for at least 10 minutes and kneading the mixture at a temperature lower than Tb into a substantially uniform kneaded mixture and the substantially uniform kneaded mixture is shaped into a film at a temperature lower than Tb.

12. A process according to any one of claims 1 to 10 wherein the substantially uniform kneaded mixture is formed by mixing (a) and (c) at a temperature lower than $Tm^a$, keeping the resultant preliminary mixture at a temperature lower than $Tm^a$ for at least 10 minutes, adding (b) and kneading the resultant mixture at a temperature lower than Tb.

13. A process for preparing a film or fiber which comprises mixing and kneading 100 parts by weight of a polyphenylene ether resin and 5 to 150 parts by weight of a solvent at a temperature lower than the melting point or melting starting temperature $Tm^a$ of said polyphenylene ether resin to form a kneaded mixture, shaping the kneaded mixture into a film or fiber at a temperature lower than $Tm^a$, and removing the solvent.

14. A process according to claim 13, wherein the kneaded mixture is formed by mixing and kneading 100 parts by weight of the polyphenylene ether resin and 5 to 30 parts by weight of the solvent.

15. A process according to claim 13 or 14 wherein the solvent has a boiling point of not more than 130°C and brings the polyphenylene ether resin into a swollen state.

16. A process according to claim 13, 14 or 15 wherein the polyphenylene ether resin has an average particle diameter of not more than 0.3μm.

17. A process according to any one of claims 13 to 16 wherein the kneaded mixture is formed by preliminarily mixing the polyphenylene ether resin and solvent at a temperature lower than Tm$^a$, keeping the mixture at a temperature lower than Tm$^a$ for at least 10 minutes and kneading the mixture at a temperature lower than Tm$^a$.

18. A process according to claim 17, wherein 10 to 50 parts by weight, per 100 parts by weight of the polyphenylene ether resin, of an additive are added before the mixture is formed by preliminary mixing or before the mixture is kneaded.

19. A process according to claim 18, wherein the additive has a maximum particle diameter of not more than 5 μm.